# EUROPEAN PATENT SPECIFICATION

(11) **EP 2 195 280 B1**
(45) Date of publication and mention of the grant of the patent: **07.09.2016**
(21) Application number: 08834879.2
(22) Date of filing: 30.09.2008
(51) Int. Cl.: C04B 26/26, C04B 14/06, C04B 18/02, E01C 11/10, C08L 95/00

(54) **METHOD OF SEALING GAPS BETWEEN MATERIALS**
VERFAHREN ZUM ABDICHTEN VON LÜCKEN ZWISCHEN MATERIALIEN
PROCÉDÉ POUR ÉTANCHER DES ÉCARTS ENTRE DES MATÉRIAUX

(30) Priority: 02.10.2007 EP 07291204
(43) Date of publication of application: 16.06.2010
(73) Proprietor: Shell Internationale Research Maatschappij B.V., 2596 HR The Hague (NL)
(72) Inventor: PANE, Corinna, F-92708 Colombes (FR)
(74) Representative: Matthezing, Robert Maarten
(86) International application number: PCT/EP2008/063076
(87) International publication number: WO 2009/043847

(56) References cited:
- DE-A1- 19 533 011
- GB-A- 2 152 941
- US-A1- 2003 165 357

## Description

### Field of the Invention

The invention relates to a method of sealing joints.

### Background of the Invention

Joint sealants are used to seal the gaps between paving stones, cobblestones, tramway rails and modular materials. The sealants typically comprise bituminous materials and are typically applied by heating the sealant material so that it flows, and pouring the sealant into the gaps between the paving stones.

FR 2706477 describes a joint sealant that is composed of a colourless synthetic bitumen and a mineral. The sealant is applied via a traditional method wherein the sealant is heated in a mixer with oil bath and liquid sealant is applied between the gaps in the paving stones. Sand is applied to the surface of the sealant to accentuate the finish and the colour, and also to provide a surface crust that confers rigidity and thermal protection to the surface.

DE 195 33 011 A1 discloses the production of chargeable and **storage-stable** granules or pellets made of bitumen, especially asphalt, in which the granules or pellets are wetted with a hardenable slurry, which can harden to a non-adhesive sleeve layer. In addition, before wetting, the bituminous material is crushed to a fraction size of less than 3 mm, a separating agent is added to the bituminous material during or after crushing, and granules or pellets are produced from the mixture of separating agent and bituminous material with addition of water. The sealant is subsequently applied in liquid state to fill in the gaps between materials.

GB 2 152 941 A discloses a modifier for paving asphalt, which comprises granulated Trinidad Epuré (purified lake asphalt) having a maximum size not larger than 25 mm and a pulverulent solid having a maximum size not larger than 2.5 mm and being composed mainly of a substance having a high softening point and compatible with paving petroleum asphalt, wherein the volume of the powdery solid is 0.5 to 2.0 times the void volume of the granulated Trinidad Epuré in the accumulated state, wherein the pulverulent solid is a powder of asphaltite, asphalt pitch or polymeric resin having a high softening point.

US 2003/165357 A1 discloses a method for producing a thermoplastic filler for use in eliminating surface damage in concrete and asphalt surfaces and as a joint compound comprising the steps of: mixing stone chips, sand, a powdered material and a bituminous binding agent into a homogenous mixture, heating the mixture to a temperature of about 180°C to 240°C and thereafter subjecting the mixture to a cooling shock by cooling the mixture, which is under constant agitation, in a rapid manner adding a coolant to the mixture.

20 The known methods of applying joint sealants are effective, but typically require the use of apparatus in which the sealant is heated. Such apparatus, often known as a kettle, can be expensive. Additionally, in the known methods, hot liquid sealant is applied to the gaps, and the operator must therefore take appropriate safety precautions. Furthermore, it can be difficult to seal small gaps, e.g. between cobblestones, because the sealant is typically applied using a lance and the lance may be too big to fit into the small gaps.

The present inventors have sought to provide an alternative method of applying a joint sealant.

### Summary of the invention

Accordingly, the present invention relates to a joint sealant comprising a bituminous material or a clear synthetic binder material, and comprising a mineral filler, wherein the joint sealant is in the form of granules.

The present invention provides a method of sealing gaps between materials by applying a joint sealant, wherein the joint sealant comprises a bituminous material or a clear synthetic binder material, and comprises a mineral filler, wherein the joint sealant is in the form of granules, comprising steps of (a) placing the granules in the gaps between the materials; and (b) heating the granules such that the joint sealant flows and seals the gaps between the materials.

The present inventors have discovered that a joint sealant can be manufactured in the form of granules, and the granules can be utilized in an advantageous method of application wherein the granules are placed in the gaps between material and heat is subsequently applied. This method of application Can use simple heating apparatus and does not require the use of an expensive heating kettle. Furthermore, this method of application limits the operators exposure to hot liquid sealant. Additionally the method cf application enables the stealing of small gaps that potentially could not have been sealed using prior art methods.

### Detailed Description of the Invention

The joint sealant comprises a bituminous material or a synthetic binder material. The bituminous material may be bitumen having a penetration in the range of 0 to 220 dmm (tested at 25°C). In a preferred embodiment of the invention, the joint sealant comprises a clear synthetic binder material. Clear synthetic binder material is preferred because the resulting sealed material is aesthetically improved because the joints can be colourless or coloured rather than black. Also, staining of the materials to be joined is reduced when using a clear synthetic binder material instead of a bituminous material. Clear synthetic binder materials are known to the skilled person and include combinations of a mineral lubricating oil extract and a modified petroleum resin and/or coumarone-indene resin as described in US 4,629,754. A preferred synthetic binder material is Mexphalte ® C from Shell. The clear synthetic binder material may also be a binder material based upon materials of vegetable origin, such as those disclosed in EP 1 466 878, e.g. the clear synthetic binder material may comprise 40 to 70wt% of natural or modified natural resin of vegetable origin, and 30 to 60wt% of vegetable oil.

The joint sealant also comprises a mineral filler. The mineral filler preferably comprises sand, having a particle size lower than 0.5mm, and fines, having a particle size lower than or equal to 0.08mm. The amount of mineral filler in the joint sealant is preferably more than 30wt%, more preferably more than 50wt%, and preferably less than 90wt%, more preferably less than 70wt%. In a preferred embodiment of the invention, the mineral filler is silica sand.

In one embodiment of the invention, the joint sealant further comprises a fibrous filler. The fibrous filler is preferably cellulose fibre, e.g. Arbocel® fibres from JRS. The average diameter of the fibres is preferably lower than 0.5mm, preferably lower than 0.1mm. The average length of the fibres is preferably from 0.5mm to 5mm. The amount of fibrous filler in the joint sealant is preferably from 0.1 to 10wt%, based upon the weight of the joint sealant, more preferably from 0.5 to 5wt%.

In one embodiment of the invention, the bituminous material or the clear synthetic binder material comprises one or more polymer materials, e.g. from 2 to 20wt% polymer material, based upon the weight of the bituminous material or the clear synthetic binder material.

The joint sealant is in the form of granules. The term "granule" is used to describe discrete units of joint sealant and does not limit the shape of the units, e.g. a granule may be spherical, egg-shaped, cubic or any other shape. The preferred size of the granules is determined by the size of the gaps between the materials to be sealed; the granules must be small enough to fit in the gaps. Typical gaps, e.g. between paving stones, are between 10 and 20mm, so preferably the longest dimension of the granules is less than 20mm, more preferably less than 10mm and most preferably less than 5mm. For handling purposes, it is preferred that the longest dimension of the granules is at least 0.5mm, more preferably at least 1mm.

Joint sealant in the form of granules may be prepared by any process known in the field of granulation, such as granulation after extrusion, manual granulation, cooling drops of hot materials, crushing of blocks etc. Manual granulation can be achieved by melting and blending the joint sealant components and pouring into a mould. Preferably a metal mould is used, and the mould is lined with greaseproof paper. Glycerine and talc may be used to stick the greaseproof paper to the mould. A thin layer of joint sealant, e.g. less than 10mm, or less than 5mm in thickness, is preferably formed in the mould and is left for approximately one hour to harden. The layer of joint sealant is turned out of the mould and is cut into granules using a hot knife. Preferably, the formed granules are coated in a fine layer of mineral filler material so that they are non sticky and do not agglomerate.

The joint sealant is used in a method wherein the granules are placed in the gaps between materials and are heated such that the joint sealant flows and seals the gaps between the materials. The materials to be sealed may be paving stones, concrete blocks or other similar construction materials where it is required to seal between the materials. Alternatively, the sealant may be used in a process to seal the gap between a metal material such as a tram rail and another metal material or construction material. Preferably the joint sealant is used in a method to seal the gaps between paving stones. The term "paving stones" is used in the present description to describe any paving material having gaps between elements of the paving material that require sealing, e.g. flagstones or cobblestones.

The granules may be placed in the gaps by a simple method of scattering the granules over the gaps and brushing the granules into the gaps. The granules are then heated whilst present in the gaps between the paving stones. The granules are preferably heated to at least 100°C, more preferably at least 120°C. The temperature must be high enough so that the granules soften and flow, and the joint sealant seals the gap between the materials. The granules are preferably not heated above 200°C and are more preferably not heated above 160°C. It is preferred that lower temperatures are used to minimise energy usage.

The method of the invention preferably comprises a further step of (c) applying sand to the joint sealant. This accentuates the finish and the colour of the joint, and also provides a surface crust that confers rigidity and thermal protection to the surface.

### Examples

The invention will now be described by reference to examples which are not intended to be limiting of the invention.

### Preparation of Granules

A metallic mould (20cmx20cmx0.5cm) was coated with a mixture of talc and glycerine and was then lined with greaseproof paper. Mexphalte C Joint P3J binder from Shell@ (a clear synthetic binder plus a mineral filler) was heated to 100°C above its softening point, poured into the mould, and left to cool and harden for approximately one hour. The hardened bitumen was removed from the mould and was cut into granules using a heated knife. The granules were approximately 8mm in diameter. The granules were coated with a fine layer of sand by contacting the granules with sand.

### Sealing of Gaps Between Paving Stones

The granules were manually spread between paving stones. The granules were heated to approximately 120°C for 20 minutes using an infra-red heater from Altenwerder Gussasphalt Technology. This provided seals between the paving stones having the same appearance as seals prepared using conventional methods.

## Claims

1. A method of sealing gaps between materials, by applying a joint sealant, wherein the joint sealant comprises a bituminous material or a clear synthetic binder material and comprises a mineral filler, and wherein the joint sealant is in the form of granules, comprising steps of
(a) placing the granules in the gaps between the materials; and
(b) heating the granules such that the joint sealant flows and seals the gaps between the materials.

2. A method of sealing gaps between materials according to claim 1, wherein the joint sealant comprises a bituminous material.

3. A method of sealing gaps between materials according to claim 1, wherein the joint sealant comprises a clear synthetic binder material selected from combinations of a mineral lubricating oil extract and a modified petroleum resin and/or coumarone-indene resin, and binder materials based upon materials of vegetable origin comprising from 40 to 70wt% of natural or modified natural resin of vegetable origin, and from 30 to 60wt% of vegetable oil.

4. A method of sealing gaps between materials according to any preceding claim, wherein the longest dimension of the granules is less than 20mm.

5. A method of sealing gaps between materials according to any preceding claim, wherein the materials are paving stones.

6. A method of sealing gaps between material according to any preceding claim, comprising a further step of (c) applying sand to the joint sealant.

## Patentansprüche

1. Verfahren zum Abdichten von Lücken zwischen Materialien durch Aufbringen eines Fugendichtstoffs, wobei der Fugendichtstoff ein bituminöses Material oder ein klares synthetisches Bindemittelmaterial umfasst und einen mineralischen Füllstoff umfasst und wobei der Fugendichtstoff in der Form von Granulatkörnern vorliegt, umfassend die Schritte
(a) Anordnen der Granulatkörner in den Lücken zwischen den Materialien; und
(b) Erhitzen der Granulatkörner, so dass der Fugendichtstoff fließt und die Lücken zwischen den Materialien abdichtet.

2. Verfahren zum Abdichten von Lücken zwischen Materialien gemäß Anspruch 1, wobei der Fugendichtstoff ein bituminöses Material umfasst.

3. Verfahren zum Abdichten von Lücken zwischen Materialien gemäß Anspruch 1, wobei der Fugendichtstoff ein klares synthetisches Bindemittelmaterial ausgewählt aus Kombinationen von einem Mineralschmierölextrakt und einem modifizierten Petroleumharz und/oder Cumaron-Inden-Harz, und Bindemittelmaterialien auf der Grundlage von Materialien mit pflanzlichem Ursprung umfassend von 40 bis 70 Gew.-% an natürlichem oder modifiziertem natürlichem Harz mit pflanzlichem Ursprung und von 30 bis 60 Gew.-% Pflanzenöl.

4. Verfahren zum Abdichten von Lücken zwischen Materialien gemäß einem der vorstehenden Ansprüche, wobei die längste Abmessung der Granulatkörner weniger als 20 mm beträgt.

5. Verfahren zum Abdichten von Lücken zwischen Materialien gemäß einem der vorstehenden Ansprüche, wobei die Materialien Pflastersteine sind.

6. Verfahren zum Abdichten von Lücken zwischen Materialien gemäß einem der vorstehenden Ansprüche, umfassend einen weiteren Schritt (c) Aufbringen von Sand auf den Fugendichtstoff.

## Revendications

1. Procédé d'obturation d'interstices entre des matériaux par application d'un produit de jointoiement, dans lequel le produit de jointoiement comprend un matériau bitumineux ou un liant synthétique transparent et comprend une charge minérale, et dans lequel le produit de jointoiement se présente sous la forme de granules, comprenant les étapes consistant à :
(a) placer les granules dans les interstices entre les matériaux ; et
(b) chauffer les granules de telle sorte que le produit de jointoiement s'écoule et obture les interstices entre les matériaux.

2. Procédé d'obturation d'interstices entre des matériaux selon la revendication 1, dans lequel le produit de jointoiement comprend un matériau bitumineux.

3. Procédé d'obturation d'interstices entre des matériaux selon la revendication 1, dans lequel le produit de jointoiement comprend un liant synthétique transparent sélectionné parmi des combinaisons d'un extrait d'huile lubrifiante minérale et d'une résine de pétrole et/ou de coumarone-indène modifiée, et des liants à base de matériaux d'origine végétale comprenant de 40 à 70 % en poids de résine naturelle ou naturelle modifiée d'origine végétale, et de 30 à 60 % en poids d'huile végétale.

4. Procédé d'obturation d'interstices entre des matériaux selon l'une quelconque des revendications précédentes, dans lequel la dimension la plus longue des granules est inférieure à 20 mm.

5. Procédé d'obturation d'interstices entre des matériaux selon l'une quelconque des revendications précédentes, dans lequel les matériaux sont des pavés.

6. Procédé d'obturation d'interstices entre des matériaux selon l'une quelconque des revendications précédentes, comprenant une étape supplémentaire consistant à (c) appliquer du sable sur le produit de jointoiement.
